# EUROPÄISCHE PATENTSCHRIFT

(11) **EP 2 945 776 B1**
(45) Veröffentlichungstag und Bekanntmachung des Hinweises auf die Patenterteilung: **23.08.2017**
(21) Anmeldenummer: 14724385.1
(22) Anmeldetag: 07.05.2014
(51) Int. Cl.: B23Q 1/48, B23Q 7/14, B23Q 11/08

(54) **WERKZEUG-MASCHINE MIT PALETTENWECHSLER**
MACHINE TOOL HAVING PALLET CHANGER
MACHINE-OUTIL AVEC ÉCHANGEUR DE PALETTES

(30) Priorität: 08.05.2013 DE 102013208440; 23.08.2013 DE 102013216752
(43) Veröffentlichungstag der Anmeldung: 25.11.2015
(73) Patentinhaber: Licon mt GmbH & Co. KG, 88471 Laupheim (DE)
(72) Erfinder: BENZ, Winfried, 89165 Dietenheim (DE); GESSNER, Frank, 88471 Laupheim (DE); WEINBUCH, Thomas, 88471 Laupheim (DE); STENGELE, Gerald, 89077 Ulm (DE)
(74) Vertreter: Rau, Schneck & Hübner Patentanwälte Rechtsanwälte PartGmbB
(86) Internationale Anmeldenummer: PCT/EP2014/059333
(87) Internationale Veröffentlichungsnummer: WO 2014/180903

(56) Entgegenhaltungen:
- EP-A2- 2 623 256
- DE-A1-102008 014 781

## Beschreibung

Die Erfindung betrifft eine Werkzeug-Maschine zur 5-achsigen Bearbeitung von Werkstücken.

Aus der DE 10 2008 014 781 A1 (entsprechend EP 2 265 409 B1 und US 8,640,313 B2) ist eine Werkzeug-Maschine nach dem Oberbegriff des Anspruches 1 bekannt. Die Z-Achse ist hierbei dadurch gebildet, dass die Schwenk-Brücke auf einem in Z-Richtung verschiebbaren WerkzeugSchlitten ausgebildet ist. Der Paletten-Wechsler weist zwei Paare von Armen auf, die zur Aufnahme der Werkstück-Paletten dienen. Während der Bearbeitung des Werkstücks ist der Paletten-Wechsler in seine untere Position verfahren, in der die dem Werkstück-Schlitten zugewandten Arme in einem Hohlraum des Werkstück-Schlittens unterhalb der Schwenk-Brücke aufgenommen sind, so dass der Werkstück-Schlitten sich frei in Z-Richtung bewegen kann. Aufgrund dieser Ausgestaltung befindet sich die Be- und Entlade-Position des Paletten-Wechslers zwar unterhalb der Schwenk-Brücke, aber oberhalb des unteren Bereiches des Werkstück-Schlittens. Während des Beschickungs- und Entnahme-Vorgangs sind zahlreiche Bewegungen insbesondere des Werkstück-Schlittens notwendig. Außerdem ist der Raumbedarf erheblich.

Aus der nicht vorveröffentlichten EP 2 623 256 A2 ist eine Werkzeug-Maschine nach dem Oberbegriff des Anspruches 1 bekannt, bei der die Verbindung zwischen dem Paletten-Wechsler und der Werkstück-Palette mit unbearbeiteten Werkstücken und der Werkstück-Palette mit bearbeiteten Werkstücken auf einer Ebene erfolgt.

Weiterhin ist eine Werkzeug-Maschine bekannt
mit einem Maschinen-Gestell,
mit einem am Maschinen-Gestell ausgebildeten Bearbeitungs-Raum,
mit mindestens einer im Bearbeitungs-Raum in senkrecht aufeinander stehenden Achsen (X-Achse, Y-Achse, Z-Achse) bewegbaren drehantreibbaren Werkzeug-Spindel,
mit einer im Bearbeitungs-Raum um eine zur X-Achse parallele A-Achse schwenkantreibbar gelagerten Schwenk-Brücke,
mit mindestens einem auf der Schwenk-Brücke angeordneten AufnahmeTisch zur lösbaren Halterung einer Werkstück-Palette,
mit einem vor dem Bearbeitungs-Raum ausgebildeten Belade- und Entlade-Raum,
mit mindestens einer im Belade- und Entlade-Raum angeordneten Aufnahme zur lösbaren Halterung einer Werkstück-Palette und mit mindestens einem im Belade- und Entlade-Raum angeordneten Paletten-Wechsler. Bei dieser bekannten Werkzeug-Maschine erfolgen die Entnahme der bearbeiteten Werkstücke und die Eingabe von zu bearbeitenden Werkstücken in den Belade- und Entlade-Raum während der Bearbeitung von Werkstücken im Bearbeitungs-Raum. Dies ist in der Technik als hauptzeitparallele Beladung bekannt. Bei dieser Werkzeug-Maschine sind Paletten-Wechsler vorgesehen, die in zwei linearen Verschieberichtungen und um eine vertikale Achse schwenkbar ausgebildet sind, um Kollisionen zwischen dem Paletten-Wechsler und der Schwenk-Brücke zu vermeiden.

Der Erfindung liegt die Aufgabe zugrunde, den Paletten-Wechsler einfach und mit geringem Platzbedarf und mit zeitlich verkürztem Wechselvorgang auszubilden.

Diese Aufgabe wird erfindungsgemäß bei der Werkzeug-Maschine nach dem Oberbegriff des Anspruches 1 durch die Merkmale im Kennzeichnungsteil des Anspruches 1 gelöst. Wesentlich ist, dass der Paletten-Wechsler nur eine lineare Bewegung und eine Drehbewegung ausführen kann und auszuführen braucht. Die Zuführung der auf Werkstück-Paletten aufgespannten zu bearbeitenden Werkstücke erfolgt linear von unten und mit einer Drehbewegung um 180° um eine vertikale Achse, wobei gleichzeitig bei der linearen vertikalen Aufwärtsbewegung die bearbeiteten Werkstücke samt den sie tragenden Werkstück-Paletten von der Schwenk-Brücke abgehoben werden. Nach der Schwenkbewegung des Paletten-Wechslers um 180° und während der anschließenden Abwärtsbewegung werden die Werkstück-Paletten mit den zu bearbeitenden Werkstücken auf der Schwenk-Brücke und die Werkstück-Paletten mit den bearbeiteten Werkstücken auf der Aufnahme im Belade- und Entlade-Raum abgesetzt. Da nur eine lineare Verschiebbarkeit in der Vertikalen und eine Drehbewegung um eine vertikale Achse vorgesehen sind, ist der Gesamtaufbau sehr einfach und damit kostengünstig. Dadurch, dass der Paletten-Wechsler sehr nah vor und unterhalb der Schwenk-Brücke angeordnet ist, wird eine sehr kompakte Bauweise erreicht. Dadurch, dass insgesamt nur zwei Bewegungen erforderlich sind, wird der Wechselvorgang zeitlich verkürzt. Es können ein oder mehrere Tische auf der Schwenk-Brücke und entsprechend eine gleiche Anzahl an Aufnahmen
im Belade- und Entlade-Raum vorgesehen sein. Weiterhin kann auch eine gleiche Anzahl an Werkzeug-Spindeln vorgesehen sein; es ist aber auch möglich, dass die Zahl der Werkzeug-Spindeln geringer ist, und zwar dann, wenn eine sequenzielle Bearbeitung der Werkstücke erfolgt. Die Ausnutzung der Schwenkbarkeit der Schwenk-Brücke um die A-Achse dient dazu, beim geradlinigen vertikalen Einfahren der Haltemittel des Paletten-Wechslers unter die Werkstück-Paletten eine Kollision zwischen der Schwenk-Brücke und den Haltemitteln des Paletten-Wechslers zu vermeiden. Hierbei wird die gattungsgemäß vorhandene Schwenkbarkeit der Schwenk-Brücke um die A-Achse ausgenutzt, um die erfindungsgemäß eingesparte horizontale Verfahrbarkeit des Palettenwechslers zu ersetzen, die beim Stand der Technik erforderlich ist.

Wenn der Paletten-Wechsler mit zu bearbeitenden Werkstücken von unten an die Schwenk-Brücke heranfährt, kann dieser Bereich durch Späne verschmutzt werden. Die Weiterbildung nach Anspruch 2 ist daher von ganz besonderem Vorteil.

Die erfindungsgemäßen Maßnahmen sind von besonderem Vorteil bei einer Weiterbildung nach Anspruch 7, bei der sich besonders platzsparend auswirkt, dass nur ein Palettenwechsler bei einer Werkzeug-Maschine mit zwei Werkzeug-Spindeln vorgesehen ist.

Weitere Vorteile und Einzelheiten der Erfindung ergeben sich aus der nachfolgenden Beschreibung eines Ausführungsbeispiels anhand der Zeichnung. Es zeigt:
- Fig. 1: eine perspektivische Ansicht einer Werkzeug-Maschine nach der Erfindung,
- Fig. 2: eine gegenüber Fig. 1 vergrößerte perspektivische Teil-Darstellung der Werkzeug-Maschine, wobei Werkstück-Paletten mit aufgespannten Werkstücken fortgelassen wurden,
- Fig. 3: einen vertikalen Längsschnitt durch die Werkzeug-Maschine in stark schematisierter Darstellung, wobei der Paletten-Wechsler sich in einer unteren Position vor Beginn eines Paletten-Wechsels befindet,
- Fig. 4: eine Darstellung entsprechend Fig. 3, wobei der Paletten-Wechsler sich in einer bereits vertikal angehobenen ersten mittleren Position befindet,
- Fig. 5: eine im Wesentlichen Fig. 3 und 4 entsprechende Darstellung, in der der Paletten-Wechsler sich in einer gegenüber Fig. 4 geringfügig weiter angehobenen Position befindet,
- Fig. 6: eine den Fig. 3 bis 5 entsprechende Darstellung, in der der Paletten-Wechsler sich in einer gegenüber Fig. 5 weiterhin geringfügig angehobenen zweiten mittleren Position befindet, und
- Fig. 7: eine wiederum den Fig. 3 bis 6 entsprechende Darstellung, in der der Paletten-Wechsler sich in seiner oberen Position befindet, in der Werkstück-Paletten mit bearbeiteten Werkstücken von der Schwenk-Brücke abgehoben sind.

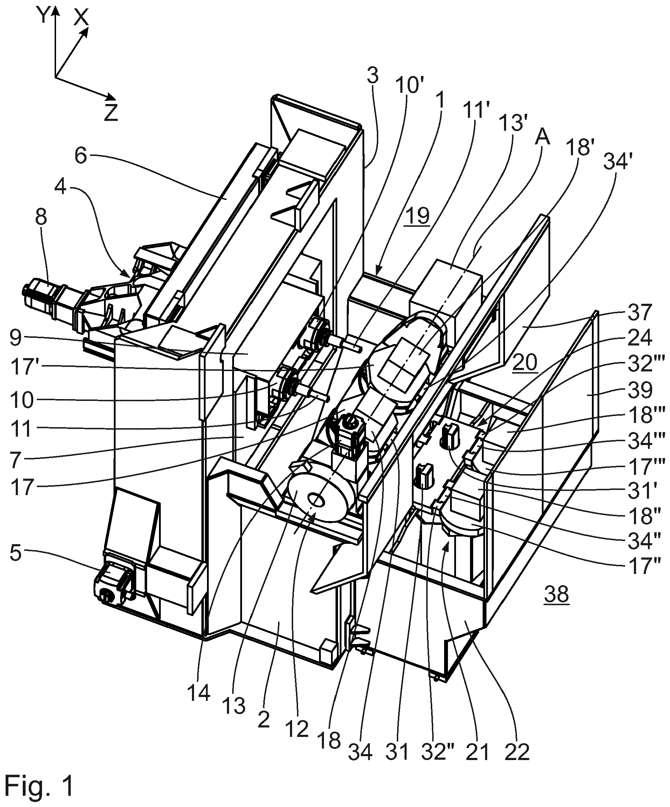

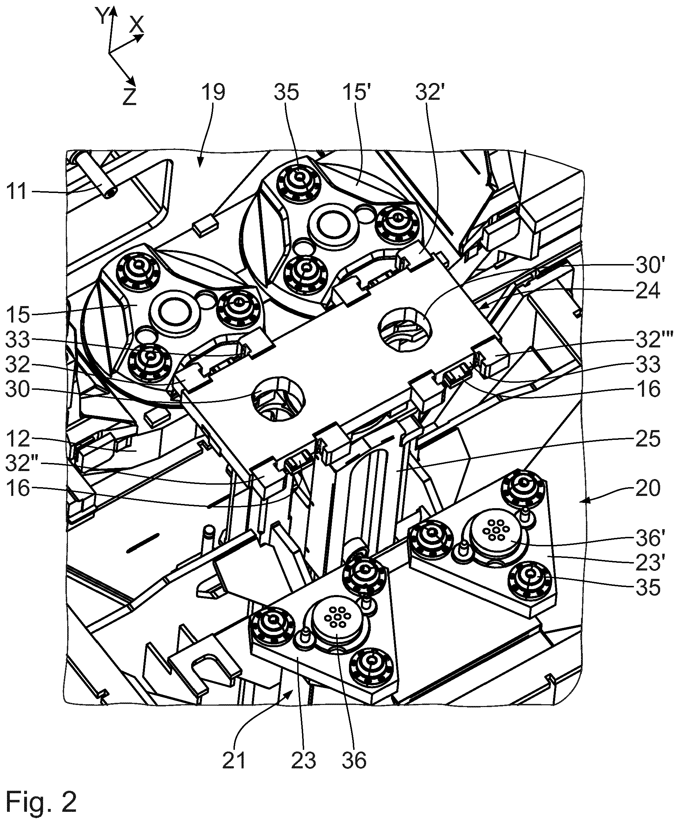

Wie insbesondere Figuren 1 und 2 zu entnehmen ist, weist eine erfindungsgemäße Werkzeug-Maschine ein etwa winkelförmiges Maschinen-Gestell 1 auf, das im Wesentlichen aus einem horizontalen Maschinenbett 2 und einem vertikalen Ständer 3 gebildet ist. Im rahmenartigen Ständer 3 ist eine Verfahr-Einheit 4 angeordnet, die einen in horizontaler X-Richtung mittels eines X-Antriebs 5 verfahrbaren X-Schlitten 6 aufweist. Am X-Schlitten 6 ist ein mittels eines nicht dargestellten Y-Antriebs in vertikaler Y-Richtung verfahrbarer Y-Schlitten 7 gelagert. Am Y-Schlitten 7 ist ein mittels eines Z-Antriebs 8 in horizontaler Z-Richtung verschiebbarer Z-Schlitten 9 gelagert, in dem mittels jeweils eines nicht dargestellten Spindel-Antriebs drehantreibbare Werkzeug-Spindeln 10 bzw. 10' angebracht sind. Die Werkzeug-Spindeln 10, 10' dienen zur Aufnahme jeweils eines Bearbeitungs-Werkzeugs 11, 11'.

Auf dem Maschinenbett 2 ist eine Schwenk-Brücke 12 abgestützt, die an ihren Enden um eine zur X-Richtung parallele A-Achse schwenkbar in Schwenk-Lagern 13, 13' gelagert ist und mittels eines Schwenk-Antriebs 14 schwenk-antreibbar ist.

Auf der Schwenk-Brücke 12 sind zwei als Rundtische 15, 15' ausgebildete Aufnahme-Tische angeordnet, die jeweils einer Werkzeug-Spindel 10, 10' zugeordnet sind. Diese Rundtische 15, 15' sind jeweils mittels eines nicht dargestellten Dreh-Antriebs um eine zur A-Achse senkrechte B-Achse dreh-antreibbar. Die Rundtische 15, 15' dienen zur Aufnahme von Werkstück-Paletten 17, 17', auf denen jeweils ein zu bearbeitendes Werkstück 18, 18' oder 18", 18''' aufgespannt ist. Der Raum oberhalb des Maschinenbetts 2 und vor dem Ständer 3 ist ein Bearbeitungs-Raum 19 der Werkzeug-Maschine.

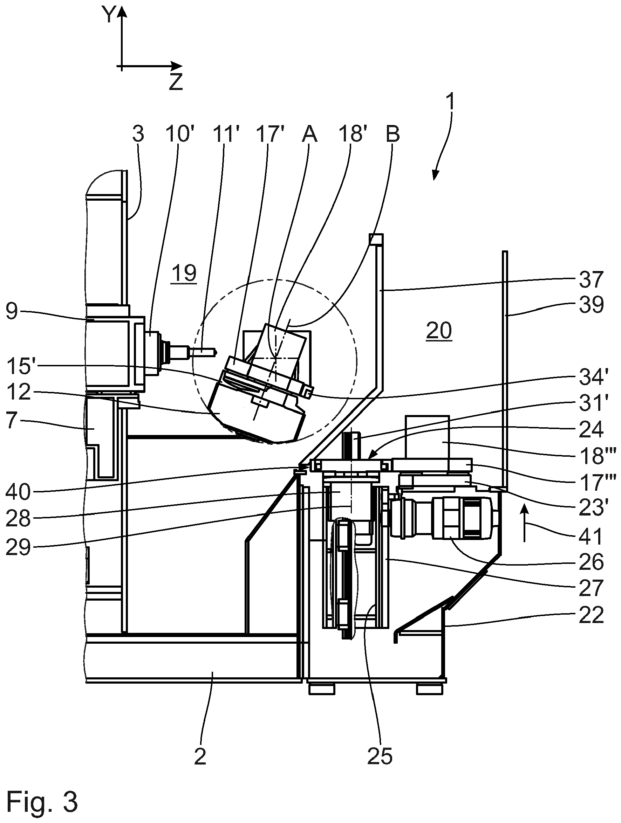

In Z-Richtung vor dem und unterhalb des Bearbeitungs-Raums 19 ist ein Belade- und Entlade-Raum 20 mit einer Paletten-Wechsel-Einheit 21 ausgebildet, bei der auf einem Paletten-Wechsler-Gestell 22 zwei Aufnahmen 23, 23' für zwei Werkstück-Paletten 17", 17''' angeordnet sind. Zwischen diesen Aufnahmen 23, 23' und der Schwenk-Brücke 12 ist der eigentliche Paletten-Wechsler 24 angeordnet, der - wie Figur 2 und 3 entnehmbar ist - auf einem vertikal verschiebbaren Paletten-Wechsler-Schlitten 25 angeordnet ist. Der Vertikal-Antrieb des Paletten-Wechsler-Schlittens 25 erfolgt mittels eines Schlitten-Antriebs 26 über einen Zahnritzel-ZahnstangenTrieb 27. Der im Wesentlichen als Platte ausgebildete Paletten-Wechsler 24 ist mittels eines auf dem Schlitten 25 angebrachten Paletten-Schwenk-Antriebs 28 um eine vertikale Paletten-Wechsler-Schwenk-Achse 29 um 180° schwenkbar.

Wie insbesondere den Figuren 1, 2 und 3, aber auch den übrigen Figuren entnehmbar ist, weist der Paletten-Wechsler 24 Führungs-Öffnungen 30, 30' auf, in die am Paletten-Wechsler-Gestell 22 angebrachte vertikale Führungs-Stangen 31, 31' in unteren Positionen des Paletten-Wechslers 24 eingreifen, wodurch der Paletten-Wechsler 24 in seinen unteren Positionen eine exakt ausgerichtete und stabilisierte Lage erhält.

An zwei Längsrändern des Paletten-Wechslers 24 sind jeweils den Rundtischen 15, 15' bzw. den Aufnahmen 23, 23' zugeordnete Haltemittel 32, 32', 32", 32''' ausgebildet, die nach oben offene Halte-Öffnungen 33 aufweisen, die nach unten durch Auflagen 16 begrenzt werden. An jeder Werkstück-Palette 17, 17', 17", 17''' ist ein Gegenstück 34, 34', 34", 34''' angebracht, das der Halte-Öffnung 33 im jeweiligen Haltemittel 32, 32', 32", 32''' derart angepasst ist, dass es im jeweiligen Haltemittel 32, 32', 32", 32''' auf der zugehörigen Auflage 16 formschlüssig gehalten wird, wenn der Paletten-Wechsler 24 hochgefahren wird und dadurch das jeweilige Haltemittel 32, 32', 32", 32''' ein Gegenstück 34, 34', 34", 34''' aufnimmt bzw. hält.

Wie ebenfalls insbesondere Figur 2 entnehmbar ist, sind auf den Rundtischen 15, 15' und auf den Aufnahmen 23, 23' der Paletten-Wechsel-Einheit 21 bekannte Spann-Elemente 35 ausgebildet, mit der die Werkzeug-Paletten 17, 17', 17", 17''' jeweils exakt ausgerichtet gehalten werden. In Figur 2 ist außerdem erkennbar, dass auf den Aufnahmen 23, 23' Medien-Kupplungen 36, 36', also Hydraulik-Anschlüsse, vorgesehen sind, mittels derer nicht dargestellte, bekannte, an den Werkstück-Paletten 17, 17', 17", 17''' ausgebildete Werkstück-Spann-Vorrichtungen geöffnet bzw. geschlossen werden, mittels derer Werkstücke 18, 18' bzw. 18", 18''' im Belade- und Entlade-Raum 20 auf einer Werkstück-Palette 17, 17' oder 17", 17''' gespannt bzw. von dieser gelöst werden.

Wie u. a. Figur 1 entnehmbar ist, ist zwischen dem Bearbeitungs-Raum 19 und dem Belade- und Entlade-Raum 20 eine Trennwand 37 als Schutzwand vorgesehen, mittels derer während des Bearbeitungsvorgangs im Bearbeitungs-Raum 19 das Heraustreten von Spänen, Öl und dergleichen in den Belade- und Entlade-Raum 20 verhindert werden kann. Sie wird nur zum Paletten-Wechsel geöffnet. An der der Bedienerseite 38 zugewandten Seite des Belade- und Entlade-Raums 20 kann weiterhin eine Schutz-Tür 39 vorgesehen sein, die nur zur Entnahme von bearbeiteten Werkstücken 18, 18', 18", 18''' und zur Beschickung mit zu bearbeitenden Werkstücken 18, 18', 18", 18''' geöffnet wird.

Der Arbeitsablauf des Paletten-Wechslers 24 ist wie folgt:

Im Bearbeitungs-Raum 19 befinden sich zwei auf Werkstück-Paletten 17, 17' aufgespannte Werkstücke 18, 18' auf den Rundtischen 15, 15'. Sie werden einer 5-achsigen Bearbeitung durch die Werkzeuge 11, 11' unterzogen, wobei die die Werkzeuge 11, 11' tragenden Werkzeug-Spindeln 10, 10' in X-, Y- und Z-Richtung zugestellt werden. Die Werkstücke 18, 18' werden unter Verschwenken um die A-Achse der Schwenk-Brücke 12 und unter Drehen um die B-Achse der Rundtische 15, 15' bewegt. Zeitgleich sind bei geöffneter Tür 39 im Belade- und Entlade-Raum 20 fertig bearbeitete Werkstücke entnommen worden und zu bearbeitende Werkstücke 18", 18''' auf auf den Aufnahmen 23, 23' befindliche und vom Paletten-Wechsler 24 gehaltene Werkstück-Paletten 17", 17''' aufgespannt worden.

Nach der Fertig-Bearbeitung der Werkstücke 18, 18' beginnt der Paletten-Wechsel, wozu die Trennwand 37 in die in Figur 1 dargestellte geöffnete Position verbracht wird. Der Paletten-Wechsler 24 befindet sich in der in den Figuren 1 und 3 dargestellten unteren Belade- und Entlade-Position 40, in der die Haltemittel 32", 32''' die Gegenstücke 34", 34''' der beiden auf den Aufnahmen 23, 23' befindlichen Werkstück-Paletten 17", 17''' formschlüssig aufnehmen.

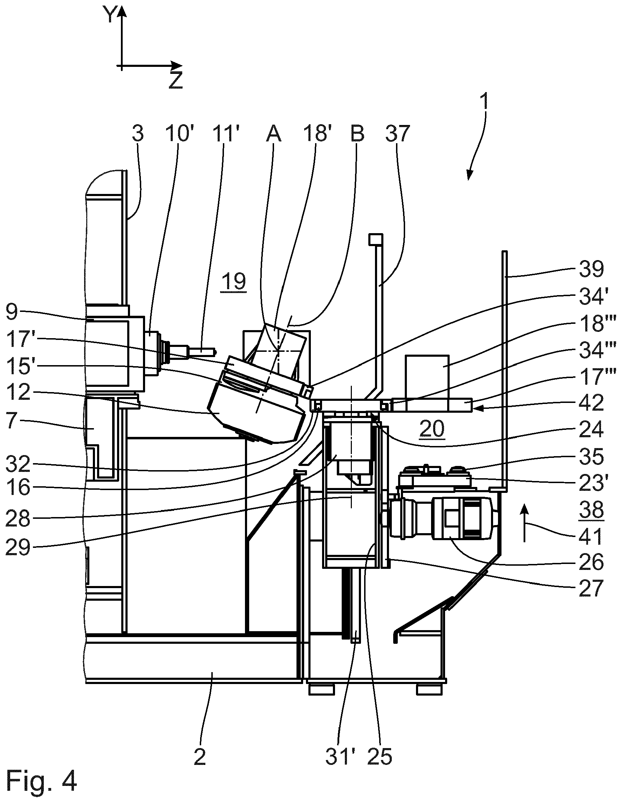

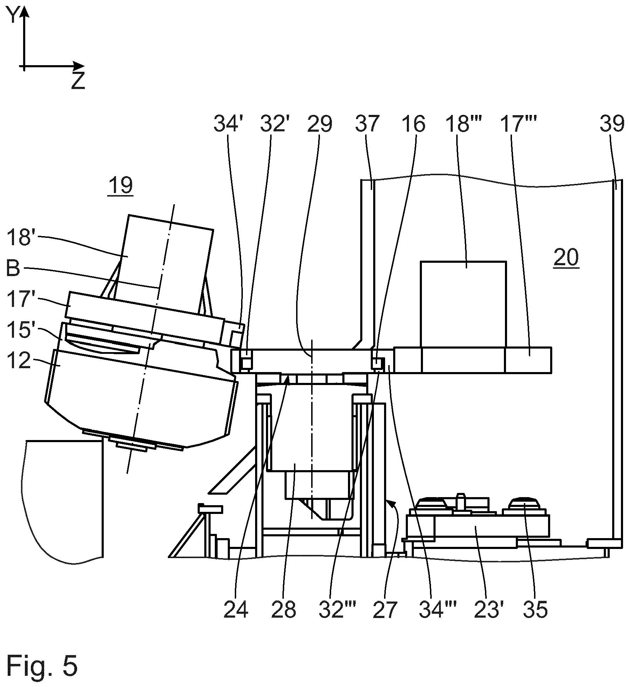

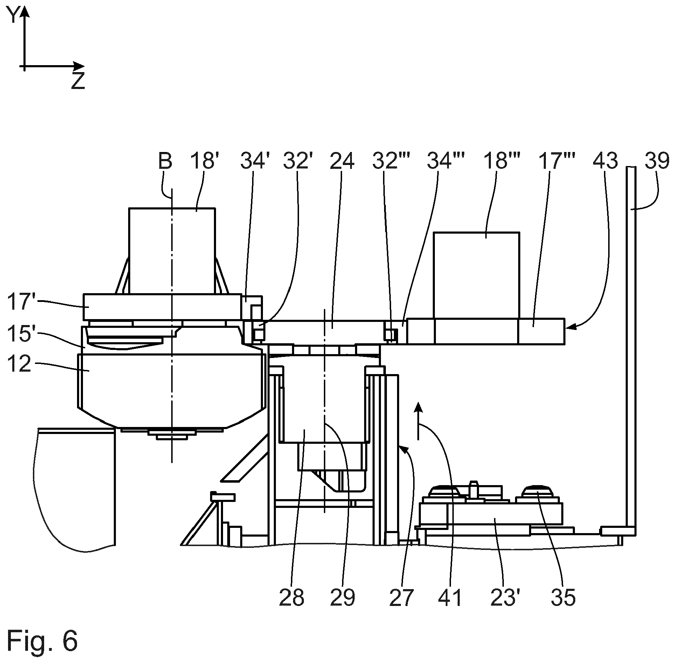

Der Paletten-Wechsler 24 wird nunmehr durch den Schlitten-Antrieb 26 in vertikaler Verschiebe-Richtung 41 nach oben in eine erste mittlere Position 42 verschoben. In dieser ersten mittleren Position 42 ist die Schwenk-Brücke 12 derart um ihre A-Achse verschwenkt, dass die der Schwenk-Brücke 12 zugewandten Haltemittel 32, 32' des Paletten-Wechslers 24 nicht in Kollision mit der Schwenk-Brücke 12 geraten. In dieser ersten mittleren Position 42 befinden sich die der Schwenk-Brücke 12 zugewandten Haltemittel 32, 32' noch unterhalb der Gegenstücke 34, 34' der auf den Rundtischen 15, 15' befindlichen Werkstück-Paletten 17, 17', wie Figur 4 und vergrößert Figur 5 entnehmbar ist. Anschließend wird - wie in Figur 6 dargestellt - die Schwenk-Brücke 12 um die A-Achse derart verschwenkt, dass die jeweilige B-Achse der Rundtische 15, 15' vertikal, also parallel zur Verschiebe-Richtung 41 des Paletten-Wechslers 24, verläuft. Der Paletten-Wechsler 24 befindet sich entsprechend Figur 6 hierbei in einer zweiten mittleren Position 43, in der die Haltemittel 32, 32' sich unmittelbar unterhalb der Gegenstücke 34, 34' der beiden auf den Rundtischen 15, 15' befindlichen Werkstück-Paletten 17, 17' befinden.

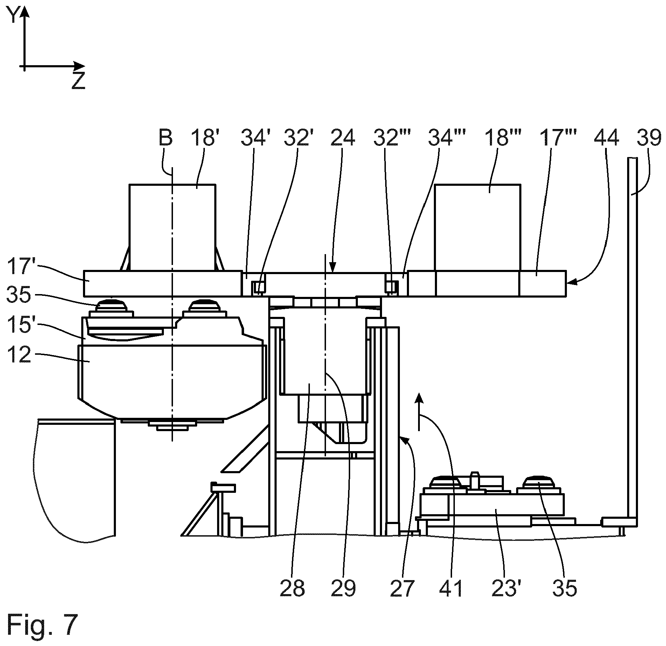

Der Paletten-Wechsler 24 wird weiterhin ohne Drehung um die Achse 29 nach oben in eine obere Position 44 verschoben, die in Figur 7 dargestellt ist. Hierbei haben zuvor die Haltemittel 32, 32' des Paletten-Wechslers 24 die Gegenstücke 34, 34' der auf den Rundtischen 15, 15' befindlichen Werkstück-Paletten 17, 17' mit fertig bearbeiteten Werkstücken 18, 18' aufgenommen und die Werkstück-Paletten 17, 17' von den Rundtischen 15, 15' abgehoben. In dieser oberen Position 44 erfolgt eine Drehung um 180° des Paletten-Wechslers 24 um die Paletten-Wechsler-Schwenk-Achse 29, so dass die bearbeiteten Werkstücke 18, 18' in den Belade- und Entlade-Raum 20 verschwenkt werden und gleichzeitig die unbearbeiteten Werkstücke 18", 18''' in den Bearbeitungs-Raum 19 verschwenkt werden. Das Absenken des Paletten-Wechslers 24 erfolgt in umgekehrter Reihenfolge zu der Aufwärtsbewegung.

Wenn die Schwenk-Brücke 12 bei vertikaler Position der B-Achse nicht im Kollisionsbereich des Paletten-Wechslers 24 bei dessen Aufwärts- bzw. Abwärtsbewegung ist, dann kann der Paletten-Wechsler 24 direkt aus der unteren Position 40 in die zweite mittlere Position 43 verfahren werden.

Grundsätzlich ist ein Stopp des Paletten-Wechslers 24 in der ersten mittleren Position 42 und der zweiten mittleren Position 43 nicht zwingend erforderlich, wenn die Steuerung dies zulässt.

Diese Steuerung der zahlreichen Antriebe einschließlich der Spann-Elemente 35 und der erwähnten Spann-Vorrichtungen erfolgt über eine zentrale programmierbare Steuerung, die nicht dargestellt ist.

## Patentansprüche

1. Werkzeug-Maschine zur 5-achsigen Bearbeitung von Werkstücken (18, 18', 18", 18''')
- mit einem ein horizontales Maschinenbett (2) und einen vertikalen Ständer (3) aufweisenden Maschinen-Gestell (1),
- mit einem am Maschinen-Gestell (1) ausgebildeten Bearbeitungs-Raum (19),
- mit mindestens einer im Bearbeitungs-Raum (19) in senkrecht aufeinander stehenden Achsen, nämlich einer X-Achse, und einer Y-Achse bewegbaren im Ständer (3) gelagerten drehantreibbaren Werkzeug-Spindel (10, 10'),
- mit einer im Bearbeitungs-Raum (19) angeordneten, auf dem Maschinenbett (2) abgestützten und um eine zur X-Achse parallele A-Achse schwenkantreibbar gelagerten Schwenk-Brücke (12),
- mit mindestens einem auf der Schwenk-Brücke (12) angeordneten um eine zur A-Achse senkrechte B-Achse schwenkbaren Rundtisch (15, 15') zur lösbaren Halterung einer Werkstück-Palette (17, 17', 17" 17'''),
- mit einem vor dem Bearbeitungs-Raum (19) ausgebildeten Belade- und Entlade-Raum (20),-mit mindestens einem im Belade- und Entlade-Raum (20) angeordneten Paletten-Wechsler (24),
-- wobei der Paletten-Wechsler (24) ausschließlich in vertikaler Richtung (41) verschiebbar und um eine vertikale Achse (29) schwenkantreibbar ausgebildet ist,
-- wobei der Paletten-Wechsler (24) erste und zweite Haltemittel (32, 32', 32", 32''') zur lösbaren Halterung von mindestens zwei Werkstück-Paletten (17, 17', 17", 17''') aufweist,
-- wobei mindestens eine im Belade- und Entlade-Raum (20) auf einem Paletten-Wechsler-Gestell (22) angeordnete unterhalb der Schwenk-Brücke (12) befindliche Aufnahme (23, 23') zur lösbaren Halterung einer Werkstück-Palette (17, 17', 17", 17''') vorgesehen ist,
-- wobei der Paletten-Wechsler (24) aus einer unteren Belade- und Entlade-Position (40) mit einer in einem zweiten Haltemittel (32", 32''') gehaltenen zweiten Werkstück-Palette (17", 17''') in vertikaler Richtung (41) über mindestens eine mittlere Position unter Herstellung einer Verbindung eines ersten Haltemittels (32, 32') mit einer auf einem Rundtisch (15, 15') der Schwenk-Brücke (12) befindlichen ersten Werkstück-Palette (17, 17') verschiebbar ausgebildet ist,
-- wobei an den Werkstück-Paletten (17, 17', 17", 17''') ein der Halteöffnung (33) angepasstes Gegenstück (34, 34', 34", 34''') ausgebildet ist,
-- wobei jedes Haltemittel (32, 32', 32", 32''') ein Gegenstück (34, 34', 34", 34''') bei einer vertikalen Aufwärtsbewegung des Paletten-Wechslers (24) unter Herstellung einer Verbindung aufnimmt,
-- wobei der Paletten-Wechsler (24) aus der mittleren Position in eine obere Position verschiebbar ausgebildet ist, in der die mit dem ersten Haltemittel (32, 32') verbundene erste Werkstück-Palette (17, 17') von dem Rundtisch (15, 15') der Schwenk-Brücke (12) nach oben abgehoben ist,
-- wobei der Paletten-Wechsler (24) in der oberen Position um die vertikale Achse (29) unter Herausschwenken der von der Schwenk-Brücke (12) abgehobenen ersten Werkstück-Palette (17, 17') in den Belade- und Entlade-Raum (20) und unter Hereinschwenken der zweiten Werkstück Palette (17", 17''') aus dem Belade- und Entlade-Raum (20) in den Bearbeitungs-Raum (19) drehbar ausgebildet ist,
-- wobei der Paletten-Wechsler (24) anschließend über die mittlere Position wieder in die untere Position (40) absenkbar ausgebildet ist, und
-- die Schwenk-Brücke (12) in den vertikalen Verschiebe-Weg und aus dem vertikalen Verschiebe-Weg des Paletten- Wechslers (24) mit Werkstück-Palette (17, 17', 17", 17''') schwenkbar ausgebildet ist,
**dadurch gekennzeichnet,**
- **dass** die im Ständer (3) gelagerte Werkzeug-Spindel (10, 10') in einer zur X-Achse und zur Y-Achse senkrechten Z-Achse bewegbar ausgebildet ist,
- **dass** die ersten und zweiten Haltemittel (32, 32', 32", 32''') an zwei Längsrändern des Paletten-Wechslers (24) ausgebildet sind und dem mindestens einen Rundtisch (15, 15') bzw. der mindestens einen Aufnahme (23, 23') zugeordnet sind und die nach unten durch Auflagen (16) begrenzt sind, und
- **dass** das an den Werkstück-Paletten (17, 17', 17", 17''') angebrachte Gegenstück (34, 34', 34", 34''') der Halte-Öffnung (33) im jeweiligen Haltemittel (32, 32', 32", 32''') derart angepasst ist, dass es im jeweiligen Haltemittel (32, 32', 32", 32''') auf der zugehörigen Auflage (16) formschlüssig gehalten wird, wenn der Paletten- Wechsler (24) hochgefahren wird und dadurch das jeweilige Haltemittel (32, 32', 32", 32''') ein Gegenstück (34, 34', 34", 34''') aufnimmt bzw. hält.

2. Werkzeug-Maschine nach Anspruch 1, **dadurch gekennzeichnet, dass** zwischen dem Bearbeitungs-Raum (19) und dem Belade- und Entlade-Raum (20) eine öffenbare Trennwand (37) angeordnet ist.

3. Werkzeug-Maschine nach Anspruch 1 oder 2, **dadurch gekennzeichnet,**
**dass** der Paletten-Wechsler (24) ohne Zwischenhalt aus der unteren Position über die mittlere Position in die obere Position verschiebbar ausgebildet ist.

4. Werkzeug-Maschine nach einem der Ansprüche 1 bis 3, **dadurch gekennzeichnet,**
**dass** die untere Belade- und Entlade-Position des Paletten-Wechslers (24) vor und unterhalb der Schwenk-Brücke (12) vorgesehen ist.

5. Werkzeug-Maschine nach einem der Ansprüche 1 bis 4, **dadurch gekennzeichnet,**
**dass** der Belade- und Entlade-Raum (20) nach außen durch eine öffenbare Schutz-Tür (39) verschließbar ausgebildet ist.

6. Werkzeug-Maschine nach einem der Ansprüche 1 bis 5, **gekennzeichnet durch**
- zwei im Bearbeitungs-Raum (19) in senkrecht aufeinander stehenden Achsen (X-Achse, Y-Achse, Z-Achse) bewegbare drehantreibbare Werkzeug-Spindeln (10, 10'),
- zwei auf der Schwenk-Brücke (12) angeordnete Rundtische (15, 15') zur lösbaren Halterung jeweils einer ersten oder zweiten Werkstück-Palette (17, 17', 17", 17'''),
- zwei im Belade- und Entlade-Raum (20) angeordnete unterhalb der Schwenk-Brücke (12) befindliche Aufnahmen (23, 23') zur lösbaren Halterung jeweils einer zweiten oder ersten Werkstück-Palette (17, 17', 17", 17''') und
- nur einen im Belade- und Entlade-Raum (20) angeordneten Paletten-Wechsler (24),
-- wobei der Paletten-Wechsler (24) jeweils zwei erste und zweite Haltemittel (32, 32', 32", 32''') zur lösbaren Halterung von jeweils zwei ersten oder zweiten Werkstück-Paletten (17, 17', 17", 17''') aufweist,
-- wobei der Paletten-Wechsler (24) aus der unteren Belade- und Entlade-Position (40) mit zwei in den zweiten Haltemitteln (32", 32''') gehaltenen zweiten Werkstück-Paletten (17", 17''') in vertikaler Richtung (41) über mindestens eine mittlere Position unter Herstellung einer Verbindung der zwei ersten Haltemittel (32, 32') mit den zwei auf den zwei Rundtischen (15, 15') der Schwenk-Brücke (12) befindlichen ersten Werkstück-Paletten (17, 17') verschiebbar ausgebildet ist,
-- wobei der Paletten-Wechsler (24) aus der mittleren Position in die obere Position verschiebbar ausgebildet ist, in der die zwei mit den ersten Haltemitteln (32, 32') verbundenen ersten Werkstück-Paletten (17, 17') von den (Rundtischen (15, 15') der Schwenk-Brücke (12) nach oben abgehoben sind,
-- wobei der Paletten-Wechsler (24) in der oberen Position um die vertikale Achse (29) unter Herausschwenken der von der Schwenk-Brücke (12) abgehobenen zwei ersten Werkstück-Paletten (17, 17') in den Belade- und Entlade-Raum (20) und unter Hereinschwenken der zwei zweiten Werkstück-Paletten (17", 17''') aus dem Belade- und Entlade-Raum (20) in den Bearbeitungs-Raum (19) drehbar ausgebildet ist.

## Claims

1. Machine tool for 5-axial processing of workpieces (18, 18', 18", 18''') comprising
- a machine frame (1) having a horizontal machine bed (2) and a vertical stand (3),
- a processing chamber (19) formed on the machine frame (1),
- at least one rotary-drivable tool spindle (10, 10') which is movable in the processing chamber (19) in axes that are perpendicular to one another, namely an -X axis, and a Y axis, and mounted in the stand (3),
- a pivot bridge (12) arranged in the processing chamber (19), which pivot bridge is supported on the machine bed (2) and drivable pivotably about an A axis parallel to the X axis,
- at least one round table (15, 15') arranged on the pivot bridge (12) and pivotable about a B axis perpendicular to the A axis for releasably mounting a workpiece pallet (17, 17', 17", 17'''),
- a loading and unloading chamber (20) formed in front of the processing chamber (19), the loading and unloading chamber (20) comprising at least one pallet changer (24) arranged in the loading and unloading chamber (20),
-- wherein the pallet changer (24) is displaceable only in vertical direction (41) and is drivable pivotably about a vertical axis (29),
-- wherein the pallet changer (24) comprises first and second holding means (32, 32', 32", 32''') for releasably mounting at least two workpiece pallets (17, 17', 17", 17'''),
-- wherein at least one work holder (23, 23') arranged in the loading and unloading chamber (20) on a pallet changer frame (22) underneath the pivot bridge (12) for releasably mounting a workpiece pallet (17, 17', 17", 17''') is provided,
-- wherein the pallet changer (24) is designed to be movable from a lower loading and unloading position (40) with a second workpiece pallet (17", 17''') mounted in a second holding means (32", 32''') in vertical direction (41) via at least one middle position forming a connection between a first holding means (32, 32') and a first workpiece pallet (17, 17') located on a round table (15, 15') of the pivot bridge (12),
-- wherein on the workpiece pallets (17, 17', 17", 17''') a counterpiece (34, 34', 34", 34''') is formed which is adapted to the holding opening (33),
-- wherein each holding means (32, 32', 32", 32''') mounts a counterpiece (34, 34', 34", 34''') during a vertical upwards movement of the pallet changer (24) by forming a connection,
-- wherein the pallet changer (24) is designed to be movable from the middle position into an upper position, in which the first workpiece pallet (17, 17') connected to the first holding means (32, 32') is lifted upwards from the round table (15, 15') of the pivot bridge (12),
-- wherein the pallet changer (24) is designed to be rotatable in the upper position about the vertical axis (29) by pivoting out the first workpiece pallet (17, 17') lifted from the pivot bridge (12) into the loading and unloading chamber (20) and by pivoting in the second workpiece pallet (17", 17''') from the loading and unloading chamber (20) into the processing chamber (19),
-- wherein the pallet changer (24) is designed to be lowerable via the middle position back into the lower position (40), and
-- the pivot bridge (12) is designed to be pivotable into the vertical displacement path and out of the vertical displacement path of the pallet changer (24) with workpiece pallet (17, 17', 17" 17''') ,
**characterized**
- **in that** the tool spindle (10, 10') mounted in the stand (3) is movable in a Z axis which is perpendicular to the X axis and to the Y axis,
- **in that** the first and second holding means (32, 32', 32", 32''') are formed on two longitudinal edges of the pallet changer (24) and assigned respectively to the at least one round table (15, 15') or the at least one mount (23, 23') and delimited at the bottom by supports (16), and
- **in that** the counterpiece (24, 24', 24", 24''') arranged on the workpiece pallets (17, 17', 17", 17''') is adapted to the holding opening (33) in the respective holding means (32, 32', 32", 32''') such that it is held in a form-fitting manner in the respective holding means (32, 32', 32", 32''') on the associated support (16) when the pallet changer (24) is started up and in this way the respective holding means (32, 32', 32", 32''') mounts or holds a counterpiece (34, 34', 34", 34''').

2. Machine tool according to claim 1, **characterised in that** between the processing chamber (19) and the loading and unloading chamber (20) a dividing wall (37) is arranged which is openable.

3. Machine tool according to claim 1 or 2, **characterised in that** the pallet changer (24) is designed to be displaceable without an inter-mediate stop from the lower position via the middle position into the upper position.

4. Machine tool according to any one of claims 1 to 3, **characterised in that** the lower loading and unloading position of the pallet changer (24) is provided in front of and underneath the pivot bridge (12).

5. Machine tool according to any one of claims 1 to 4, **characterised in that** the loading and unloading chamber (20) is designed to be closeable to the outside by a protective door (39) that is openable.

6. Machine tool according to any one of claims 1 to 5, **characterised by**
- two rotary drivable tool spindles (10, 10') which are movable in the processing chamber (19) in axes that are perpendicular to one another (X axis, Y axis, Z axis)
- two round tables (15, 15') arranged on the pivot bridge (12) for releasably mounting a first or second workpiece pallet (17, 17', 17", 17''') respectively,
- two work holders (23, 23') arranged in the loading and unloading chamber (20) underneath the pivot bridge (12) for releasably mounting a second or first workpiece pallet (17, 17', 17", 17''') respectively and
- only one pallet changer (24) arranged in the loading and unloading chamber (20),
-- wherein the pallet changer (24) comprises in each case two first and second holding means (32, 32', 32", 32''') for releasably mounting in each case two first or second workpiece pallets (17, 17', 17", 17'''),
-- wherein the pallet changer (24) is designed to be movable from the lower loading and unloading position (40) with two second workpiece pallets (17", 17''') held in the second holding means (32", 32''') in vertical direction (41) via at least one middle position forming a connection between the two first holding means (32, 32') and the two first workpiece pallets (17, 17') located on the two round tables (15, 15') of the pivot bridge (12),
-- wherein the pallet changer (24) is designed to be movable from the middle position into the upper position, in which the two first workpiece pallets (17, 17') connected to the first holding means (32, 32') are lifted up from the round tables (15, 15') of the pivot bridge (12),
-- wherein the pallet changer (24) in the upper position is designed to be rotatable about the vertical axis (29) by pivoting out the two first workpiece pallets (17, 17') lifted from the pivot bridge (12) into the loading and unloading chamber (20) and by pivoting in the two second workpiece pallets (17", 17''') from the loading and unloading chamber (20) into the processing chamber (19).

## Revendications

1. Machine-outil pour l'usinage à 5 axes de pièces (18, 18', 18", 18''')
- avec un bâti de machine (1) comportant un banc de machine (2) horizontal et un montant (3) vertical,
- avec un espace d'usinage (19) formé sur le bâti de machine (1),
- avec au moins une broche porte-outil (10, 10') entraînable en rotation dans l'espace d'usinage (19), montée de manière mobile dans le montant (3) sur des axes perpendiculaires l'un par rapport à l'autre, en l'occurrence un axe X et un axe Y,
- avec un pont pivotant (12) disposé dans l'espace d'usinage (19), s'appuyant sur le banc de machine (2) et monté de manière entraînable en pivotement autour d'un axe A parallèle à l'axe X,
- avec au moins une table ronde (15, 15') disposée sur le pont pivotant (12), pivotante autour d'un axe B perpendiculaire à l'axe A pour le maintien amovible d'une palette porte-pièce (17, 17', 17", 17'''),
- avec un espace de chargement et de déchargement (20) formé devant l'espace d'usinage (19), avec au moins un changeur de palette (24) disposé dans l'espace de chargement et de déchargement (20),
-- où le changeur de palette (24) est déplaçable exclusivement en direction verticale (41) et est prévu entraînable en pivotement autour d'un axe vertical (29),
-- où le changeur de palette (24) présente un premier et un deuxième moyen de maintien (32, 32', 32" , 32''') pour le maintien amovible d'au moins deux palettes porte-pièce (17, 17', 17", 17'''),
-- où au moins un support (23, 23') est prévu pour le maintien amovible d'une palette porte-pièce (17, 17', 17" , 17'''), disposé dans l'espace de chargement et de déchargement (20) sur un bâti de changeur de palette (22) et situé en dessous du pont pivotant (12),
-- où le changeur de palette (24) est prévu déplaçable dans la direction verticale (41) à partir d'une position de chargement et de déchargement inférieure (40) avec une deuxième palette porte-pièce (17", 17''') maintenue dans un deuxième moyen de maintien (32" , 32'''), en passant par au moins une position centrale en réalisant une connexion d'un premier moyen de maintien (32, 32') avec une première palette porte-pièce (17, 17') située sur une table ronde (15, 15') du pont pivotant (12),
-- où une pièce complémentaire (34, 34', 34", 34''') ajustée à l'ouverture de maintien (33) est formée sur les palettes porte-pièce (17, 17', 17", 17'''),
-- où chaque moyen de maintien (32, 32', 32", 32''') reçoit une pièce complémentaire (34, 34', 34", 34''') en réalisant une connexion lors d'un déplacement vertical ascendant du changeur de palettes (24),
-- où le changeur de palette (24) est prévu déplaçable de la position centrale vers une position supérieure où la première palette porte-pièce (17, 17') raccordée au premier moyen de maintien (32, 32') est soulevée de la table ronde (15, 15') du pont pivotant (12),
-- où le changeur de palette (24) est prévu rotatif autour de l'axe vertical (29) dans la position supérieure par basculement de la première palette porte-pièce (17, 17') soulevée du pont pivotant (12) dans l'espace de chargement et de déchargement (20) et par introduction dans l'espace d'usinage (19) de la deuxième palette porte-pièce (17", 17''') pivotée hors de l'espace de chargement et de déchargement (20),
-- où le changeur de palette (24) est ensuite prévu ré-abaissable en position inférieure (40) en passant par la position centrale, et
-- le pont pivotant (12) est prévu pivotant vers la course de déplacement verticale et hors de la course de déplacement verticale du changeur de palettes (24) avec une palette porte-pièce (17, 17', 17", 17'''),
**caractérisée en ce que**
- la broche porte-outil (10, 10') montée dans le montant (3) est prévue déplaçable sur un axe Z perpendiculaire à l'axe X et à l'axe Y,
- le premier et le deuxième moyens de maintien (32, 32', 32", 32''') sont formés sur deux bords longitudinaux du changeur de palettes (24) et associés à ladite au moins une table ronde (15, 15') ou audit au moins un support (23, 23'), et délimités sur le bas par des appuis (16), et
- la pièce complémentaire (34, 34', 34", 34''') appliquée contre les palettes porte-pièce (17, 17', 17", 17''') est ajustée à l'ouverture de maintien (33) dans le moyen de maintien (32, 32', 32" , 32''') respectif de manière à être maintenue par engagement positif dans le moyen de maintien (32, 32', 32" , 32''') respectif sur l'appui (16) correspondant, quand le changeur de palette (24) est relevé, le moyen de maintien (32, 32', 32", 32''') respectif recevant ou maintenant de ce fait une pièce complémentaire (34, 34', 34", 34''').

2. Machine-outil selon la revendication 1, **caractérisée**
**en ce qu'**une paroi de séparation ouvrable (37) est disposée entre l'espace d'usinage (19) et l'espace de chargement et de déchargement (20).

3. Machine-outil selon la revendication 1 ou la revendication 2, **caractérisée en ce que**
le changeur de palette (24) est prévu déplaçable sans arrêt intermédiaire de la position inférieure vers la position supérieure en passant par la position centrale.

4. Machine-outil selon l'une des revendications 1 à 3, **caractérisée en ce que**
la position de chargement et de déchargement inférieure du changeur de palettes (24) est prévue devant et sous le pont pivotant (12).

5. Machine-outil selon l'une des revendications 1 à 4, **caractérisée en ce que**
l'espace de chargement et de déchargement (20) est prévu fermable par rapport à l'extérieur par une porte de protection ouvrable (39).

6. Machine-outil selon l'une des revendications 1 à 5, **caractérisée par**
- deux broches porte-outil (10, 10') entraînables en rotation dans l'espace d'usinage (19), mobiles sur des axes perpendiculaires les uns par rapport aux autres (axe X, axe Y, axe Z),
- deux tables rondes (15, 15') disposées sur le pont pivotant (12) pour le maintien amovible d'une première ou d'une deuxième palette porte-pièce (17, 17', 17", 17''') chacune,
- deux supports (23, 23') disposés dans l'espace de chargement et de déchargement (20) en dessous du pont pivotant (12) pour le maintien amovible d'une deuxième ou d'une première palette porte-pièce (17, 17', 17", 17''') chacun, et
- un seul changeur de palette (24) disposé dans l'espace de chargement et de déchargement (20),
-- où le changeur de palette (24) présente un premier et un deuxième moyen de maintien (32, 32', 32", 32''') pour le maintien amovible de deux premières ou deuxièmes palettes porte-pièce (17, 17', 17", 17''') chacun,
-- où le changeur de palette (24) est prévu déplaçable dans la direction verticale (41) à partir de la position de chargement et de déchargement inférieure (40) avec deux deuxièmes palettes porte-pièce (17", 17''') maintenues dans les deuxièmes moyens de maintien (32", 32'''), en passant par au moins une position centrale en réalisant une connexion des deux premiers moyens de maintien (32, 32') avec les deux premières palettes porte-pièce (17, 17') situées sur les deux tables rondes (15, 15') du pont pivotant (12),
-- où le changeur de palette (24) est prévu déplaçable de la position centrale vers une position supérieure où les deux premières palettes porte-pièce (17, 17') raccordées aux premiers moyens de maintien (32, 32') sont soulevées des tables rondes (15, 15') du pont pivotant (12),
-- où le changeur de palette (24) est prévu rotatif autour de l'axe vertical (29) dans la position supérieure par basculement des deux premières palettes porte-pièce (17, 17') soulevées du pont pivotant (12) dans l'espace de chargement et de déchargement (20) et par introduction dans l'espace d'usinage (19) des deux deuxièmes palettes porte-pièce (17", 17''') pivotées hors de l'espace de chargement et de déchargement (20).
